# EUROPÄISCHE PATENTSCHRIFT

(11) **EP 1 897 155 B1**
(45) Veröffentlichungstag und Bekanntmachung des Hinweises auf die Patenterteilung: **03.12.2008**
(21) Anmeldenummer: 06777404.2
(22) Anmeldetag: 21.06.2006
(51) Int. Cl.: H01L 41/08, H01L 41/113, G01H 11/08, H01L 41/09

(54) **SCHALLWELLENDETEKTOR UND VERFAHREN ZUM AUFNEHMEN EINER WELLE**
ACOUSTIC WAVE DETECTOR AND METHOD FOR DETECTING A WAVE
DETECTEUR D'ONDES SONORES ET PROCEDE POUR DETECTER UNE ONDE

(30) Priorität: 28.06.2005 DE 102005030135
(43) Veröffentlichungstag der Anmeldung: 12.03.2008
(73) Patentinhaber: SIEMENS AKTIENGESELLSCHAFT, 80333 München (DE)
(72) Erfinder: GOTTLIEB, Bernhard, 81739 München (DE); KAPPEL, Andreas, 85649 Brunnthal (DE); SCHWEBEL, Tim, 80337 München (DE); WALLENHAUSER, Carsten, 01987 Schwarzeheide (DE)
(86) Internationale Anmeldenummer: PCT/EP2006/063413
(87) Internationale Veröffentlichungsnummer: WO 2007/000402

(56) Entgegenhaltungen:
- EP-A- 1 098 429
- EP-A- 1 319 859
- US-A- 5 063 542
- MAYER HANS W: "AIRBAG MIT AUGEN UND OHREN" VDI NACHRICHTEN, VDI VERLAG GMBH, DUSSELDORF, DE, Bd. 58, Nr. 49, 2004, Seite 16, XP009072513 ISSN: 0042-1758 in der Anmeldung erwähnt

## Beschreibung

Die Erfindung bezieht sich auf einen Schallwellendetektor mit den oberbegrifflichen Merkmalen des Patentanspruchs 1 bzw. auf ein Verfahren zum Aufnehmen und zum Bereitstellen zumindest eines von einer Welle abhängigen Informations- und/oder Steuersignals mit den oberbegrifflichen Merkmalen des Patentanspruchs 6.

Eine Einsetzbarkeit der Schalldetektion als Mittel zur Informationsgewinnung wird aus "Airbag mit Augen und Ohren", VDI nachrichten, Karlsruhe 3.12.04, ersichtlich. Entwickelt werden demnach Verfahren zur Crashdetektion, die eine bedarfsgerechtere Auslösung eines Airbags ermöglichen. Ein solches Verfahren basiert auf der Detektion des durch die Verformung der Kfz-Karosserie ausgelösten Körperschalls mit Hilfe akustischer Sensoren. Als akustische Sensoren werden dabei geätzte mikromechanische IC-Strukturen (IC: Integrierte Schaltung) verwendet, welche kapazitive Veränderungen bewirken.

Eine spezielle Festkörperaktor-Antriebsvorrichtung ist in Art eines Piezo-Ring-Motors aus EP 1098429 A2 bekannt. Diese Festkörperaktor-Antriebsvorrichtung weist eine Welle mit einer Wellenachse, eine Antriebseinrichtung, welche Festkörperaktoren aufweist, zum Versetzen der Welle in eine Rotation um die Wellenachse und ein Lager mit einer Lagerwandung zum Lagern der Welle auf. Die Antriebseinrichtung ist im Wesentlichen ringförmig mit einer Durchgangsöffnung ausgebildet, wobei der Innendurchmesser der Durchgangsöffnung etwas größer als der Außendurchmesser der hindurchführenden Welle ausgebildet ist. Durch die in radialer Richtung auf die Antriebseinrichtung einwirkenden Festkörperaktoren wird die Antriebseinrichtung gegenüber der Welle in eine seitliche Hinund Herbewegung versetzt, welche die an dem Innenumfang der Durchgangsöffnung anliegende Welle in die Rotation versetzt.

Allgemein bekannt ist eine Anordnung mit einem Antrieb für eine Welle, wobei die Anordnung zusätzlich mechanische Sensoren aufweist zum Erfassen einer Last, welche auf die Welle wirkt.

Allgemein bekannt ist, dass Piezokeramik als elektromechanischer Wandler in beiden Richtungen wirkt. Durch das Anlegen einer mechanischen Spannung bzw. Kraft, d.h. durch eine erzwungene Deformation z. B. einer Vielschichtkeramik, wird eine elektrische Ladung generiert, die bei hochohmigem Klemmenabschluss aufgrund der Kapazität der Vielschichtkeramik als Potentialdifferenz zwischen den Klemmen abgreifbar ist, was als direkter piezoelektrischer Effekt bezeichnet wird. Durch das Anlegen eines elektrischen Feldes, d.h. das Aufbringen von Ladung auf eine kapazitiv wirkende Vielschichtkeramik, wird eine mechanische Spannung aufgebaut bzw. eine Deformation erzeugt, was als inverser piezoelektrischer Effekt bezeichnet wird.

Die Aufgabe der Erfindung besteht darin, einen alternativen Schallwellendetektor vorzuschlagen, welcher eine Welle aufnimmt und ein davon abhängiges Informations- und/oder Steuersignal bereitstellt.

Diese Aufgabe wird durch einen Schallwellendetektor mit den Merkmalen des Patentanspruchs 1 bzw. ein Verfahren mit den Merkmalen des Patentanspruchs 6 gelöst.

Vorteilhafte Ausgestaltungen sind Gegenstand von abhängigen Ansprüchen.

Bevorzugt wird insbesondere ein Schallwellendetektor mit zumindest einem Sensor zum Aufnehmen einer Welle und zum Ausgeben eines dementsprechenden Sensorsignals und mit einer Auswerteeinrichtung zum Auswerten des Sensorsignals zum Bereitstellen eines vom Sensorsignal abhängigen Informations- und/oder Steuersignals, wobei der Sensor durch einen mit einem Antriebssignal antreibbaren Festkörperaktor einer Festkörperaktor-Antriebsvorrichtung ausgebildet ist und wobei eine Schaltung bereitgestellt ist zum Trennen des Sensorsignals von einem solchen Antriebssignal.

Bevorzugt wird insbesondere ein Schallwellendetektor, bei dem zumindest zwei Festkörperaktoren in oder an einer übergeordneten Vorrichtung, insbesondere in oder an einem Fahrzeug, voneinander beabstandet angeordnet sind und/oder in deren Verstellrichtung zueinander unter einem Winkel angeordnet sind zum Ermöglichen des Bestimmens eines Ursprungsorts der Welle in oder an der übergeordneten Vorrichtung.

Bevorzugt wird insbesondere ein Schallwellendetektor, bei dem die zumindest zwei Festkörperaktoren in zueinander verschiedenen Festkörperaktor-Antriebsvorrichtungen integriert sind.

Bevorzugt wird insbesondere ein Schallwellendetektor, bei dem die zumindest zwei Festkörperaktoren in einer einzigen Festkörperaktor-Antriebsvorrichtung integriert sind.

Bevorzugt wird insbesondere ein Schallwellendetektor, bei dem die Auswerteeinrichtung ausgebildet und/oder geschaltet ist zum Bestimmen eines Ursprungsorts der Welle und/oder einer Ursprungsursache der Welle. Der Schallwellendetektor weist insbesondere zu diesem Zwecke einen Intensitätsschwellenschalter, einen Spektrumanalysator, einen Korrelator und/oder einen Aufpralldetektor auf.

Bevorzugt wird insbesondere ein Verfahren zum Aufnehmen und zum Bereitstellen zumindest eines von einer Welle abhängigen Informations- und/oder Steuersignals in einem Schallwellendetektor, insbesondere ein Verfahren zum Einsatz in einem solchen Schallwellendetektor, bei dem die akustische Welle eines akustischen und/oder auf eine Struktur einwirkenden Ereignisses mit zumindest einem Sensor aufgenommen und als ein Sensorsignal ausgegeben wird und bei dem das Sensorsignal ausgewertet wird zum Bereitstellen des Informations- und/oder Steuersignals, wobei als der Sensor ein mit einem Antriebssignal antreibbarer Festkörperaktor einer Festkörperaktor-Antriebsvorrichtung verwendet wird, wobei das Sensorsignal von einem solchen Antriebssignal getrennt und ausgegeben wird.

Bevorzugt wird insbesondere ein Verfahren, bei dem das Sensorsignal zumindest zweier verschiedener Festkörperaktoren ausgewertet wird hinsichtlich eines Ursprungsorts der Welle in oder an einer übergeordneten Vorrichtung, insbesondere in oder an einem Fahrzeug als der übergeordneten Vorrichtung.

Bevorzugt wird insbesondere ein Verfahren, bei dem eine Laufzeitdifferenz von einem Ursprungsort der Welle zu den Festkörperaktoren zum Bestimmen des Ursprungsorts der Welle in oder an einer übergeordneten Vorrichtung bestimmt wird, insbesondere mittels einer Korrelation der Sensorsignale bestimmt wird.

Bevorzugt wird insbesondere ein Verfahren, bei dem konkret bestehende mögliche Laufwege der Welle beim Bestimmen der Laufzeitdifferenz berücksichtigt werden.

Bevorzugt wird insbesondere ein Verfahren, bei dem die Sensorsignale zumindest zweier verschiedener Festkörperaktoren richtungsabhängig ausgewertet werden hinsichtlich des Ursprungsorts der Welle in oder an einer übergeordneten Vorrichtung.

Bevorzugt wird insbesondere ein Verfahren, bei dem eine Intensität der Welle berücksichtigt wird beim Auswerten zum Bestimmen eines Ereignistyps und/oder einer Ereignisintensität hinsichtlich eines Ursprungs der Welle.

Bevorzugt wird insbesondere ein Verfahren, bei dem ein Frequenzspektrum der Welle berücksichtigt wird beim Auswerten zum Bestimmen eines Ereignistyps und/oder einer Ereignisintensität hinsichtlich eines Ursprungs der Welle.

Bevorzugt wird insbesondere ein Verfahren, bei dem abhängig von Art und/oder Intensität und/oder zeitlichem Verlauf eines solchen Informations- und/oder Steuersignals ein Sicherheitssystem einer übergeordneten Vorrichtung, insbesondere ein Sicherheitssystem eines Fahrzeugs angesteuert wird. Insbesondere wird ein aktives Fahrzeug-Personensicherungssystem im Fall eines Unfalls oder ein Alarmsystem im Fall eines Einbruchs angesteuert.

Bevorzugt wird insbesondere eine Festkörperaktor-Antriebsvorrichtung mit zumindest einem Festkörperaktor und mit einer Schaltung zum Ausgeben zumindest eines Sensorsignals als Sensor für einen solchen Schallwellendetektor.

Bevorzugt wird insbesondere eine Festkörperaktor-Antriebsvorrichtung mit zumindest zwei Festkörperaktoren und einem daran angekoppelten Antriebsring zum Versetzen einer Welle in Rotation.

Alternativ können als Antriebselemente aber auch beliebige andere Festkörperaktoren eingesetzt werden, z. B. elektrostriktive oder magnetostriktive Aktoren.

Die Verwendung einer Festkörperaktor-Antriebsvorrichtung neben dem Antrieb von baulichen Komponenten relativ zu anderen baulichen Komponenten zusätzlich als Sensor für akustische Ereignisse ist in überraschender Weise vorteilhaft, da auf den ersten Blick eine akustische Welle sowohl auf das Gehäuse einer Festkörperaktor-Antriebsvorrichtung als auch auf die aus diesem Gehäuse herausgeführte Welle einwirkt. Aufnehmbar sind durch die Festkörperaktoren nur Relativbewegungen zwischen der Welle und dem Gehäuse. Mit Blick auf die Frequenzen typischer akustischer Wellen und Laufzeitunterschiede zwischen dem Auftreffen einer solchen Welle auf einerseits das Gehäuse und andererseits die Welle oder eine von der Welle angetriebenen baulichen Komponenten sind jedoch ausreichend, um eine solche akustische Welle aufnehmen und auswerten zu können. Von Bedeutung ist insbesondere die axiale Verkürzung bzw. Längung der Aktoren. Neben einer Relativbewegung zwischen der in Rotation versetzbaren Welle und dem Gehäuse führt aber z.B. auch eine Torsion und/oder minimale Drehung der Welle zu einem auswertbaren Signal.

Unter einer Welle, wie insbesondere einer akustischen Welle, ist nicht nur eine für das menschliche Gehör erfassbare akustische Welle zu verstehen, sondern eine Schallwelle im weitesten Sinne als einer sich nach mechanischen Prinzipien ausbreitenden Welle, einschließlich einer sich durch feste, flüssige oder gasförmige Bereiche oder Körper ausbreitenden Welle.

Eine Besonderheit der Piezoringmotoren als beispielhafte Festkörperaktor-Antriebsvorrichtungen besteht in der Sensoreigenschaft der in ihnen zum Einsatz kommenden Piezoaktoren. Auf die Piezoaktoren einwirkende Umweltfaktoren, wie Temperaturänderungen und Krafteinwirkungen, generieren über den piezoelektrischen Effekt Ladungen und können daher sehr empfindlich nachgewiesen werden. Auch die in einem Piezoringmotor verbauten Piezoaktoren sind sensitiv gegenüber Krafteinwirkungen auf das Gehäuse oder die Antriebswelle und wandeln diese über eine große Bandbreite hinweg in elektrische Signale.

Ein solcher Piezoringmotor ist neben dem Haupteinsatz als Antrieb als akustischer Sensor nutzbar. Durch gleichzeitige Nutzung der sensorischen und aktorischen, smarten Eigenschaften entsteht ein intelligentes Antriebssystem. Der Antrieb als Bestandteil eines mechatronischen Systems generiert Informationen über sein Umfeld, durch die das Systemverhalten in gewünschter Weise beeinflusst werden kann.

Als Einsatzgebiete sind die Automobil-, Automatisierungs- und Gebäudetechnik von besonderem Interesse, in denen ein intelligenter Antrieb einen Beitrag zur Sicherheit und zum Komfort leisten kann. Die Integration eines akustischen Sensors in ein Antriebssystem stellt einen großen Gewinn an Funktionalität und Sicherheit dar.

Ein beispielhafter Piezoringmotor stellt ein Antriebskonzept für z. B. Kfz-Fensterheber (KFZ: Kraftfahrzeug) dar. Mittels Lastdetektion für einen solchen rotatorischen Antrieb werden Verfahren ermöglicht, die u.a. einen verbesserten Einklemmschutz bieten, wenn ein solcher Piezoringmotor als Fensterhebermotor eingesetzt wird. Zu beachten ist dabei, dass die Detektion an der Motorwelle angreifender mechanischer Lasten deutlich von der Detektion akustischer Ereignisse bzw. von Körperschall zu unterscheiden ist. Bei den heute z.B. als Fensterhebermotoren eingesetzten Elektromotoren besteht zur Schalldetektion keine direkte Möglichkeit.

Die Festkörperaktor-Motoren bzw. Antriebsvorrichtungen weisen besondere Eigenschaftskombinationen auf, die es in dieser Form bisher nicht gab und die völlig neue Funktionen, wie die Körperschalldetektion, vorzugsweise sogar ohne hardwareseitigen Zusatzaufwand ermöglichen. Die Festkörperaktoren sind als hochdynamische Kraftsensoren einsetzbar. Schallenergie, einschließlich Körperschallenergie, wird durch einen solchen Piezoaktor in elektrische Ladungen gewandelt, die proportional zur Krafteinwirkung auf den Piezoaktor sind. Die in den Ausführungsbeispielen dargestellten Lösungen koppeln die durch Schallenergie induzierten Ladungen aus dem Piezoaktor aus, filtern und verstärken das Signal und führen es einer zur Auswertung geeigneten Elektronik zu. In einem einfachen Fall besteht die Elektronik aus einem Schwellwertschalter, andernfalls z. B. aus einem Spektrumanalysator oder einem Korrelator. Als Ergebnis der Auswertung steht eine Information über das akustische Umfeld der Festkörperaktor-Antriebsvorrichtung zur Verfügung. Ermöglicht werden z. B. Zusatzfunktionen wie die Crash- oder Glasbruch-Detektion.

Ein Ausführungsbeispiel wird nachfolgend anhand der Zeichnung näher erläutert. Es zeigen:
- Fig. 1: im Schnitt eine Draufsicht auf eine FestkörperaktorAntriebsvorrichtung mit einer Welle und mit einer Steuer- und Schaltungsanordnung zum Ansteuern der Festkörperaktor-Antriebsvorrichtung und zum Erfassen einer auf die Welle wirkenden Schallwelle oder relative zur Welle einer auf ein Gehäuse wirkenden Schallwelle,
- Fig. 2: eine Filteranordnung zum Filtern eines Sensorsignals aus einem Antriebssignal einer FestkörperaktorAntriebsvorrichtung gemäß Fig. 1,
- Fig. 3: eine alternative Filteranordnung,
- Fig. 4: eine alternative Filteranordnung,
- Fig. 5: eine Auswerteschaltung zum Auswerten solcher Sensorsignale,
- Fig. 6: eine alternative Auswerteschaltung,
- Fig. 7: ein Anwendungsbeispiel für eine FestkörperaktorAntriebsvorrichtung mit einer solchen Steuer- und Schaltungsanordnung,
- Fig. 8: schematisch eine Draufsicht auf ein Fahrzeug mit mehreren solchen Schalldetektoren und
- Fig. 9: ein Spektrum einer Schallenergie, welche über einen in eine Fahrzeugtür eingebauten Piezoringmotor aufgenommen wurde gegenüber dem Spektrum eines Hintergrundrauschens.

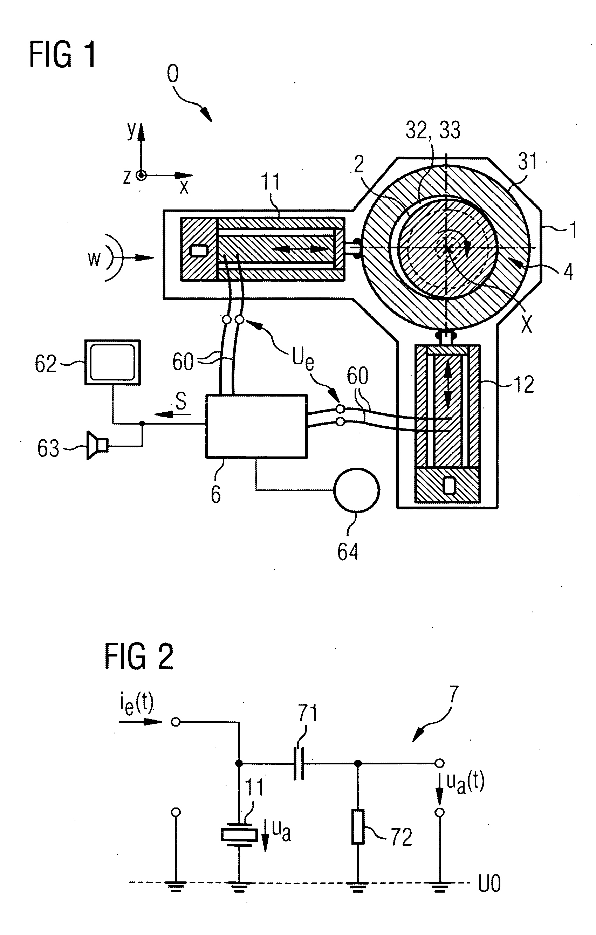

Wie dies aus Fig. 1 und 2 ersichtlich ist, besteht eine beispielhafte Festkörperaktor-Antriebsvorrichtung 0 aus einer Vielzahl von Einzelkomponenten, wobei die dargestellten Komponenten um weitere Komponenten ergänzbar sind bzw. gegen gleich wirkende Komponenten anderer Bauart austauschbar sind.

Die Festkörperaktor-Antriebsvorrichtung 0 weist ein Gehäuse 1 auf, welches die weiteren Komponenten aufnimmt. In dem Gehäuse 1 ist mittels einer Lageranordnung eine Welle 2 gelagert, wobei sich eine Wellenachse X der Welle 2 in axialer Richtung z aus dem Gehäuse 1 heraus erstreckt. Zum Versetzen der Welle 2 um die Wellenachse X in eine Wellenrotation dient eine Antriebsvorrichtung. Die Antriebsvorrichtung besteht im Wesentlichen aus vorzugsweise zwei oder mehr Festkörperaktoren 11, 12 und einem Antriebskörper 31, welcher über die Festkörperaktoren 11, 12 mechanisch steif mit einer Innenwandung des Gehäuses 1 verbunden ist. Die Festkörperaktoren 11, 12 sind dabei derart angeordnet, dass sie den Antriebskörper 31 relativ zu dem Gehäuse 1 in eine Translationsbewegung in einer Ebene x, y senkrecht zur axialen Richtung z versetzen. Die Translationsbewegung versetzt den Antriebskörper 31 dabei in eine Hin- und Herbewegung, vorteilhafterweise eine kreisförmige Bewegung. Der Antriebskörper 31 weist eine Öffnung 32 auf, welche insbesondere als Durchgangsöffnung ausgebildet ist. Durch die Öffnung 32 des Antriebskörpers 31 führt die Welle 2 hindurch, wobei der Außendurchmesser der Welle 2 geringer als der Innendurchmesser der Öffnung 32 des Antriebskörpers 31 ist. Der Antriebskörper 31 wird durch die Festkörperaktoren 11, 12 derart verstellt, dass eine Wellen-Außenwandung 20 vorzugsweise durchgehend mit einer Antriebskörper-Innenwandung 33 in Reib- und Formschluss steht, so dass durch die Bewegung des Antriebskörpers 31 die Welle 2 in die Wellenrotation versetzt wird.

Hinsichtlich der Ansteuerung sind der erste und der zweite der Festkörperaktoren 11, 12 in ihrer Wirkrichtung senkrecht zueinander in der Ebene x, y senkrecht zur Rotationsachse der Welle 2 angeordnet.

Zum Ansteuern der Festkörperaktoren 11, 12 dient eine Steuereinrichtung 6, welche über Leiter 60 die einzelnen Festkörperaktoren 11, 12 mit Spannungen bzw. Ladungen ansteuert. Entsprechend der Spannungen bzw. Ladungen dehnen sich die Festkörperaktoren 11, 12 entsprechend aus bzw. ziehen sich gegebenenfalls zusammen. Außerdem dienen diese Leiter 60 oder zusätzliche Leiter dazu, von den Festkörperaktoren 11, 12 in umgekehrter Richtung Signale, insbesondere Spannungen oder Ladungen, zu der Steuereinrichtung 6 zu übertragen. Dies ermöglich die Ausnutzung der Doppelfunktionalität der Festkörperaktoren 11, 12, um diese nicht nur als Aktoren sondern auch als Sensoren einzusetzen. Auf die Festkörperaktoren 11, 12 einwirkende Kräfte verursachen in diesen eine Ladungsverschiebung bzw. Potenzialänderung, welche dem von der Steuereinrichtung 6 angelegten Spannungs- oder Ladungswert überlagert wird. Als solche Kräfte sind auch Schallwellen anzusehen.

Mittels der Steuereinrichtung 6 mit integrierter oder vorgeschalteter Detektorschaltung kann dadurch der Betrieb nicht nur der Festkörperaktor-Antriebsvorrichtung sondern alternativ oder zusätzlicher einer übergeordneten Vorrichtung wie einem Kraftfahrzeug überwacht, geregelt und/oder gesteuert werden. Beispielsweise kann im Fall eines Fahrzeugs als der übergeordneten Vorrichtung ein Aufprall detektiert werden, welcher auf die Welle 2 oder relativ dazu auf das Gehäuse einwirkt, so dass beispielsweise ein Einbruchversuch oder Unfall erfasst werden kann. In einem solchen Fall kann wahlweise eine Warnfunktion durch Ansteuern einer Anzeigeeinrichtung 62 oder einer akustischen Ausgabeeinrichtung 63 und/oder eine entsprechende Ansteuerung aktiver Personensicherungssysteme durch die Steuereinrichtung 6 veranlasst werden. Neben der Aktivierung von Funktionen mit direktem Bezug auf ein Gebäude oder ein Fahrzeug als der übergeordneten Vorrichtung können auch dazu externe Funktionalitäten angesteuert werden. Optional können auch Teile der Funktionalitäten einer solchen Steuereinrichtung 6 in Detektor-Schaltungsanordnungen ausgelagert werden, welche integrierter Bestandteil der Festkörperaktoren 11, 12 sind oder mit diesen in Verbindung stehen.

Da z.B. eine Piezokeramik als elektromechanischer Wandler solcher Festkörperaktoren 11, 12 in beiden Richtungen wirkt, wird sowohl durch das Anlegen eines elektrischen Feldes bzw. durch das Aufbringen von Ladung auf eine kapazitiv wirkende Vielschichtkeramik eine mechanische Spannung aufgebaut bzw. eine Deformation erzeugt, als auch durch das Anlegen einer mechanischen Spannung bzw. Kraft aufgrund einwirkender Schallwellen, d.h. durch eine erzwungene Deformation eine elektrische Ladung generiert, die bei hochohmigem Klemmenabschluss aufgrund der Kapazität der Vielschichtkeramik als Potentialdifferenz zwischen den Klemmen abgreifbar ist. Der Zusammenhang zwischen Ladung und Kraft bzw. Spannung und Kraft ist nahezu linear. Ladungen bzw. Spannungen sind mittels geeigneter elektronischer Schaltungen durch die Steuereinrichtung 6 elektronisch leicht auswertbar.

Besondere Vorteile bei der derart ausgebildeten Ring-Festkörperaktor-Antriebsvorrichtung gemäß Fig.1 ergeben sich, wenn jeder der Festkörperaktoren 11, 12 mit einer eigenen elektronischen Treiberstufe betrieben wird. Dabei wird jeder Festkörperaktor 11, 12 mit der phasenverschobenen gleichen Signalform, d.h. zeitlichem Verlauf der aufgeprägten Ladung beaufschlagt.

Neben Anordnungen mit einem solchen Piezo-Ring-Motor als Festkörperaktor-Antriebsvorrichtung 0 sind auch andersartig aufgebaute Festkörperaktor-Antriebsvorrichtungen einsetzbär. Beispielsweise können jeweils zwei oder mehr hinsichtlich ihrer Wirkrichtung parallel zueinander angeordnete Festkörperaktoren eingesetzt werden, um nicht einen Strom oder eine Spannung eines einzelnen solchen Festkörperaktors sondern eine Differenzspannung oder ein Differenzsignal zwischen zwei solchen Festkörperaktoren abgreifen und auswerten zu können.

Auch lineare Festkörperaktor-Antriebsvorrichtungen sind prinzipiell zur Umsetzung des Konzeptes einsetzbar. Beispielsweise kann das rotatorische Prinzip auch durch eine Zahnstange schnell in einen Linearantrieb umgebaut werden.

Das Auskoppeln der durch Schallenergie erzeugten elektrischen Signale aus einem Festkörperaktor 11 erfolgt z. B. nach Schaltungen nach Fig. 2 - 4 In den Ausführungsformen bezeichnen die Signale uₑ(t) und iₑ(t) die Antriebs- bzw. Ansteuersignale der Festkörperaktoren 11 im motorischen Betrieb. Die Funktion uₐ(t) bezeichnet das elektrische Ausgangssignal als Sensorsignal, resultierend aus der Sensorfunktion des Aktors.

Nach Fig. 2 wird das Sensorsignal uₐ(t) durch eine elektrische Kapazität z. B. eines Kondensators 71 ausgekoppelt. Die kapazitive Größe und ein elektrischer Widerstand 72 bilden einen Hochpass, welcher das Sensorsignal vom Ansteuersignal uₑ(t) für die Aktorfunktion trennt. Der Festkörperaktor 11 wird in diesem Fall strom- bzw. ladungsgeregelt betrieben. Bei dieser Anordnung sind somit der Kondenstor 71 und der Widerstand 72 zueinander in Reihe und zugleich parallel zum Festkörperaktor 11 geschaltet. Der Festkörperaktor 11 und der Widerstand 72 sind dabei an einer gemeinsamen Basisspannung U0 angelegt. Die Ausgangsspannung, welche das Sensor- bzw. Sensorsignal uₐ(t) bereitstellt, wird zwischen einerseits dem Kondensator 71 und dem Widerstand 72 und andererseits der Basisspannung U0 abgegriffen.

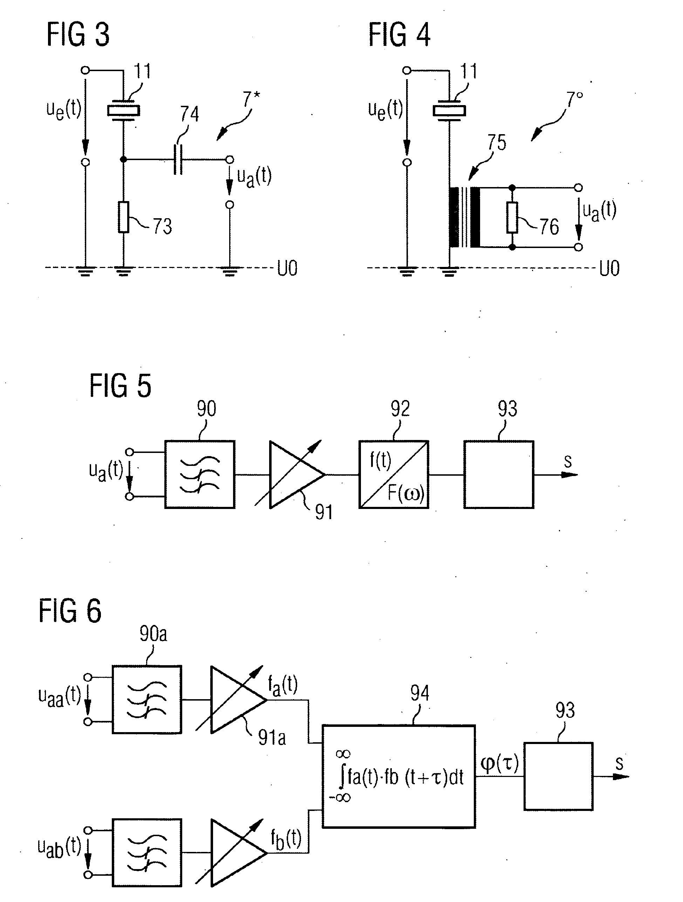

Nach Fig. 3 wird das Sensorsignal uₐ(t) über einen Shuntwiderstand 73 und eine kapazitive Größe wie einen Kondensator 74 ausgekoppelt. Die durch die Schallenergie generierte Ladung verursacht einen Stromfluss, der über einen Shuntwiderstand 73 in eine proportionale Ausgangsspannung als dem Sensorsignal uₐ(t) umgewandelt wird. Die Schaltung ist für spannungsgeregelte Piezoaktoren geeignet. Bei dieser Anordnung sind der Festkörperaktor 11 und der Widerstand 73 zwischen der Ansteuerspannung als dem Antriebssignal uₑ(t) und einer Basisspannung U0 in Reihe geschaltet. Zwischen dem Festkörperaktor 11 und dem Shuntwiderstand 73 ist der Kondensator 74 an einem Abgriff angeschlossen. Der zweite Abgriff des Kondensators 74 stellt gegenüber der Basisspannung U0 das Sensorsignal uₑ(t) bereit.

Durch den Aufbau nach Fig. 4 wird, vergleichbar mit dem Aufbau aus Fig. 3, ein durch Schallenergie induzierter Strom in eine proportionale Ausgangsspannung als Sensorsignal uₐ(t) konvertiert. Das Signal wird mit einer induktiven Komponente wie einem Transformator 75 aus der Festkörperaktor-Signalleitung ausgekoppelt. Die durch die Schallenergie im Festkörperaktor generierten elektrischen Ladungen induzieren einen Stromfluss durch die Sekundärinduktivität des Transformators 75. Der Sekundärstrom wird über einen Widerstand 76 in eine proportionale Spannung als dem Sensorsignal uₐ(t) umgewandelt. Bei dieser Anordnung sind somit der Festkörperaktor 11 und die erste Spule des Transformators 75 zwischen der Antriebsspannung als Antriebssignal uₑ(t) und einer Basisspannung U0 in Reihe geschaltet. Zwischen die Abgriffe der zweiten Spule des Transformators 75 ist der Widerstand 76 geschaltet. Außerdem wird an diesen beiden Abgriffen das Sensorsignal uₐ(t) abgegriffen.

Die Auswertung solcher Sensor- bzw. Schallsignale uₐ(t) kann z. B. nach einem Aufbau gemäß Fig. 5 oder Fig. 6 erfolgen. Darin sind symbolisch die Schaltungen zur Signalaufbereitung dargestellt. Ein Eingangsfilter 90 bzw. 90a und 90b bei einem bzw. zwei Festkörperaktor-Antriebsvorrichtungen, deren Sensorsignale uₐ(t) bzw. uₐₐ (t) und u_{ab} (t) ausgewertet werden, trennt die Aktor-Steuersignale vom Sensorsignal. Durch einen variablen Verstärker 91 bzw. 91a und 91b werden die Signalpegel an den Eingangsbereich der Folgestufe angepasst. Nach Fig. 5 wird das gefilterte und verstärkte Sensorsignal dabei einer Fouriertransformation in einer Transformationseinrichtung 92 zugeführt und das Signalspektrum F(ω) daraus durch einen Computer oder Mikrocontroller 93 ausgewertet. Eine solche Analyse generiert Informationen über die Art der Schallquelle mittels der Amplitude und über die Übertragungsfunktion mittels spektraler Zusammensetzung und Phase des den Schall transportierenden Kanals als Informations- und/oder Steuersignal s.

Nach dem Aufbau aus Fig. 6 wird das gefilterte und verstärkte Signal fₐ(t), f_{b}(t) von zwei Eingangskanälen einem Kreuzkorrelator 94 zugeführt, der als Ausgangsfunktion die Korrelation ϕ(τ) der beiden Kanäle bezüglich einer Zeitverschiebung τ ausgibt. Das Maximum der Funktion ϕ(τ) wird durch einen angeschlossenen Computer oder Mikrorechner 93 ermittelt. Der zugehörige Wert der Laufzeitverschiebung τ entspricht dem Laufzeitunterschied der Sensor- bzw. Schallsignale zweier räumlich getrennter Festkörperaktor-Antriebsvorrichtungen 0, z. B. zweier Piezoringmotoren. Im Beispiel ist die Anzahl der Kanäle auf zwei beschränkt, sie kann aber durch zusätzliche Kreuzkorrelatoren weiter erhöht werden. Durch Analyse der Laufzeitunterschiede der Schallwellen, welche sich in den Sensorsignalen widerspiegeln, und der bekannten Position der Festkörperaktor-Antriebsvorrichtungen als Sensoren, kann auf die Position der Schallquelle Q zurück geschlossen werden. In der Praxis vorhandene Zusatzinformationen, welche die Menge möglicher Orte reduzieren, verringern auch die für eine exakte Ortung nötige Anzahl von Sensoren.

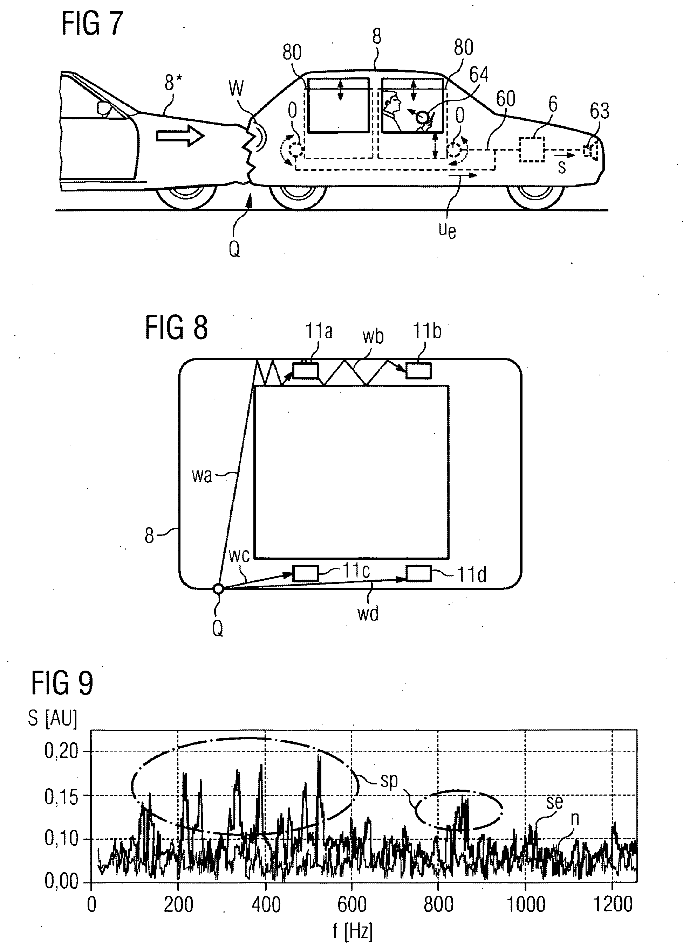

Fig. 7 zeigt eine beispielhafte vorteilhafte Anwendung einer solchen Festkörperaktor-Antriebsvorrichtung in einem Kraftfahrzeug 8, bei welchem Fensterscheiben 80 durch je eine Festkörperaktor-Antriebsvorrichtung 0 hoch bzw. herunter verstellt werden können. Die Steuereinrichtung 6 dient bei diesem einfachen Ausführungsbeispiel nicht nur zum Verstellen der Fenster 80 nach oben oder unten sondern zugleich zum Erfassen von nicht normalen Betriebszuständen, z. B. einem Einbruchversuch oder einem Unfall. Falls beispielsweise durch ein solches Ereignis eine Erschütterung einer Fahrzeugkarosserie durchgeführt wird, so führt dies zu einer Schallwelle, welche auf die Festkörperaktoren einwirkt. Entsprechend kann durch die Steuereinrichtung 6 die Auslösung von Airbags 64 als aktiver Sicherheitsvorrichtung oder einer Hupe als Warnsignal veranlasst werden. Als weitere beispielhafte Anwendungsform kann die Steuereinrichtung 6 auch bei Stillstand des Kraftfahrzeugs 8 und abgeschalteter Kraftfahrzeug-Funktionalität zum Überwachen der Fenster 80 oder des gesamten Kraftfahrzeugs dienen. Ein Versuch, das Fenster 80 gewaltsam nach unten zu schieben oder einzuschlagen, würde durch die Sensorwirkung der Festkörperaktoren als Schallwellen erfasst werden, so dass die aktiv belassene Steuereinrichtung 6 ein Alarmsignal ausgeben kann, beispielsweise durch Aktivieren der Kraftfahrzeughupe als der akustischen Ausgabeeinrichtung 63.

Fig. 8 stellt beispielhaft den Einsatz von vier Festkörperaktor-Antriebsvorrichtungen, insbesondere Piezoringmotoren als Fensterhebern dar. Die Karosserie eines Fahrzeugs 8 ist vereinfacht in Draufsicht dargestellt. In dieser Applikation sind die Festkörperaktor-Antriebsvorrichtungen bzw. deren Festkörperaktoren 11a - 11d an genau bekannten Stellen verteilt, die in Bezug auf die Fahrzeuglängsachse vorteilhafterweise symmetrisch sind. Darüber hinaus können weitere Festkörperaktor-Antriebsvorrichtungen z.B. zum Antrieb eines Schiebedaches, der Scheibenwischer, zur Sitz-/Lüftungsklappenverstellung o. Ä. in dem Fahrzeug 8 vorhanden sein. Ein akustisches Ereignis in einem Bereich der Karosserie entspricht einer örtlich begrenzten Schallquelle Q. Deren Schallenergie wird über die Karosserie durch Schallwellen z.B. auf den Wegen wa, wb, wc und wd auf die Festkörperaktor-Antriebsvorrichtungen übertragen. Die Signale haben dabei unterschiedliche Laufzeiten, die durch eine Korrelationsanalyse elektronisch leicht nachgewiesen und ausgewertet werden können. Durch eine auf die Karosserie abgestimmte Laufzeitanalyse unter Berücksichtigung der geometrischen Form des Fahrzeugmodells, der unterschiedlichen Signalpfade und Schallgeschwindigkeiten, lässt sich neben der Intensität und der spektralen Zusammensetzung insbesondere die zeitlich veränderliche Position der Schallquelle Q berechnen.

Der in Fig. 8 dargestellte Aufbau unter Verwendung einer Signalaufbereitung nach Fig. 5 und/oder Fig. 6, kann zur Detektion eines Fahrzeug-Crashs verwendet werden und generiert als Zusatzinformationen den Ort der Materialverformung innerhalb der Karosserie, sowie die Schwere der Deformation. Die Fahrzeugelektronik kann diese Information zur Ansteuerung der aktiven Sicherheitssysteme verwenden, wodurch die Sicherheit der Fahrzeuginsassen wesentlich verbessert wird. Eine weitere Anwendung dieses Aufbaus ist der Diebstahlschutz. Schallenergie, verursacht z. B. durch Glas- oder sonstigen Bruch am unbewegten Fahrzeug, wird durch die Festkörperaktor-Antriebsvorrichtungen detektiert und als Diebstahlwarnung an die Fahrzeugelektronik weitergegeben.

In Fig. 9 ist das Spektrum einer über einen in eine Fahrzeugtür eingebauten Piezoringmotor aufgenommenen Schallenergie se dargestellt. Zur Demonstration wurde die Fahrzeugtür mit einem metallischen Gegenstand angeregt. Die Messung wurde bei tiefen Frequenzen durchgeführt und wobei der Piezoringmotor über elastische Puffer mechanisch von der Tür entkoppelt war. Auch unter diesen ungünstigen Bedingungen ergibt sich vor dem Hintergrundrauschen n eine deutliche Signatur sb des Ereignisses.

## Patentansprüche

1. Schallwellendetektor mit
- zumindest einem Sensor zum Aufnehmen einer Welle (w; wa, wb, wc, wd) und zum Ausgeben eines dementsprechenden Sensorsignals (uₐ) und
- einer Auswerteeinrichtung (6) zum Auswerten des Sensorsignals (uₐ) zum Bereitstellen eines vom Sensorsignal abhängigen Informations- und/oder Steuersignals (s),
**gekennzeichnet durch**
- den Sensor, der **durch** einen mit einem Antriebssignal (uₑ) antreibbaren Festkörperaktor (11, 12; 11a, 11b, 11c, 11d) einer Festkörperaktor-Antriebsvorrichtung (0) ausgebildet ist, und
- eine Schaltung (7; 7°; 7*) zum Trennen des Sensorsignals (uₐ) von einem solchen Antriebssignal (uₑ).

2. Schallwellendetektor nach Anspruch 1, bei dem zumindest zwei Festkörperaktoren (11, 12; 11a - 11d) in oder an einer übergeordneten Vorrichtung, insbesondere in oder an einem Fahrzeug (8), voneinander beabstandet angeordnet sind und/oder in deren Verstellrichtung (x, y) zueinander unter einem Winkel angeordnet sind zum Ermöglichen des Bestimmens eines Ursprungsorts (Q) der Welle (w; wa - wd) in oder an der übergeordneten Vorrichtung.

3. Schallwellendetektor nach Anspruch 2, bei dem die zumindest zwei Festkörperaktoren (11a - 11d) in zueinander verschiedenen Festkörperaktor-Antriebsvorrichtungen integriert sind.

4. Schallwellendetektor nach Anspruch 2 oder 3, bei dem die zumindest zwei Festkörperaktoren (11, 12) in einer einzigen Festkörperaktor-Antriebsvorrichtung (0) integriert sind.

5. Schallwellendetektor nach einem vorstehenden Anspruch, bei dem die Auswerteeinrichtung (6) ausgebildet und/oder geschaltet ist zum Bestimmen eines Ursprungsorts (Q) der Welle (w) und/oder einer Ursprungsursache der Welle (w), insbesondere zu diesem Zwecke aufweist einen Intensitätsschwellenschalter, einen Spektrumanalysator, einen Korrelator und/oder einen Aufpralldetektor.

6. Verfahren zum Aufnehmen und zum Bereitstellen zumindest eines von einer Welle (w; wa, wb, wc, wd) abhängigen Informations- und/oder Steuersignals (s) in einem Schallwellendetektor, insbesondere Verfahren zum Einsatz in einem Schallwellendetektor nach einem vorstehenden Anspruch, bei dem
- die Welle (w; wa - wd) eines Wellen erzeugenden Ereignisses mit zumindest einem Sensor aufgenommen und als ein Sensorsignal (uₐ) ausgegeben wird und
- das Sensorsignal (uₐ) ausgewertet wird zum Bereitstellen des Informations- und/oder Steuersignals (s),
**dadurch gekennzeichnet, dass**
- als der Sensor ein mit einem Antriebssignal (uₐ) antreibbarer Festkörperaktor (11, 12; 11a, 11b, 11c, 11d) einer Festkörperaktor-Antriebsvorrichtung (0) verwendet wird,
- wobei das Sensorsignal (uₐ) von einem solchen Antriebssignal (uₑ) getrennt und ausgegeben wird.

7. Verfahren nach Anspruch 6, bei dem das Sensorsignal (uₐ) zumindest zweier verschiedener Festkörperaktoren (11, 12; 11a - 11d) ausgewertet wird hinsichtlich eines Ursprungsorts (Q) der Welle (w) in oder an einer übergeordneten Vorrichtung, insbesondere in oder an einem Fahrzeug (8).

8. Verfahren nach Anspruch 6 oder 7, bei dem eine Laufzeitdifferenz (τ) von einem Ursprungsort (Q) der Welle (w) zu den Festkörperaktoren (11, 12; 11a - 11d) zum Bestimmen des Ursprungsorts (Q) der Welle (w) in oder an einer übergeordneten Vorrichtung bestimmt wird, insbesondere mittels einer Korrelation der Sensorsignale bestimmt wird.

9. Verfahren nach Anspruch 8, bei dem konkret bestehende mögliche Laufwege der Welle (da - wd) beim Bestimmen der Laufzeitdifferenz (τ) berücksichtigt werden.

10. Verfahren nach einem der Ansprüche 6 bis 9, bei dem die Sensorsignale (uₐ) zumindest zweier verschiedener Festkörperaktoren (11, 12) richtungsabhängig ausgewertet werden hinsichtlich des Ursprungsorts (Q) der Welle (w) in oder an einer übergeordneten Vorrichtung.

11. Verfahren nach einem der Ansprüche 6 bis 10, bei dem eine Intensität (S) der Welle (w) berücksichtigt wird beim Auswerten zum Bestimmen eines Ereignistyps und/oder einer Ereignisintensität hinsichtlich eines Ursprungs der Welle (w).

12. Verfahren nach einem der Ansprüche 6 bis 11, bei dem ein Frequenzspektrum (F(ω)) der Welle (w) berücksichtigt wird beim Auswerten zum Bestimmen eines Ereignistyps und/oder einer Ereignisintensität hinsichtlich eines Ursprungs der Welle.

13. Verfahren nach einem der Ansprüche 6 bis 12, bei dem abhängig von Art und/oder Intensität und/oder zeitlichem Verlauf eines solchen Informations- und/oder Steuersignals (s) ein Sicherheitssystem einer übergeordneten Vorrichtung, insbesondere ein Sicherheitssystem eines Fahrzeugs (8) angesteuert wird, insbesondere ein aktives Fahrzeug-Personensicherungssystem (64) im Fall eines Unfalls oder ein Alarmsystem (63) im Fall eines Einbruchs angesteuert wird.

14. Festkörperaktor-Antriebsvorrichtung (0) mit zumindest einem Festkörperaktor (11, 12) und mit einer Schaltung (6) zum Ausgeben zumindest eines Sensorsignals (uₐ) als Sensor für einen Schallwellendetektor nach einem vorstehenden Anspruch.

15. Festkörperaktor-Antriebsvorrichtung nach Anspruch 14 mit zumindest zwei Festkörperaktoren (11, 12) und einem daran angekoppelten Antriebsring (31) zum Versetzen einer Welle (2) in Rotation.

## Claims

1. Acoustic wave detector having
- at least one sensor for recording a wave (w; wa, wb, wc, wd) and for outputting a corresponding sensor signal (uₐ) and
- an evaluation device (6) for evaluating the sensor signal (uₐ) for the purpose of providing an information and/or control signal (s) as a function of the sensor signal,
**characterised by**
- the sensor, which is embodied by means of a solid-state actuator (11, 12; 11a, 11b, 11c, 11d) of a solid-state actuator drive device (0), which solid-state actuator can be driven by means of a drive signal (uₑ), and
- a circuit (7; 7°; 7*) for separating the sensor signal (uₐ) from such a drive signal (uₑ).

2. Acoustic wave detector according to claim 1, wherein at least two solid-state actuators (11, 12; 11a - 11d) are arranged at a distance from one another in or on a higher-level device, in particular in or on a vehicle (8), and/or are arranged in their adjustment direction (x, y) relative to one another at an angle in order to enable a place of origin (Q) of the wave (w; wa - wd) in or on the higher-level device to be determined.

3. Acoustic wave detector according to claim 2, wherein the at least two solid-state actuators (11a - 11d) are integrated in different solid-state actuator drive devices.

4. Acoustic wave detector according to claim 2 or 3, wherein the at least two solid-state actuators (11, 12) are integrated in a single solid-state actuator drive device (0).

5. Acoustic wave detector according to a preceding claim, wherein the evaluation device (6) is embodied and/or connected for the purpose of determining a place of origin (Q) of the wave (w) and/or a cause of origin of the wave (w), in particular for this purpose having an intensity threshold switch, a spectrum analyser, a correlator and/or a collision detector.

6. Method for recording and providing at least one information and/or control signal (s) as a function of a wave (w; wa, wb, wc, wd) in an acoustic wave detector, in particular method for use in an acoustic wave detector according to a preceding claim, wherein
- the wave (w; wa - wd) of a wave-generating event is recorded by means of at least one sensor and output as a sensor signal (uₐ) and
- the sensor signal (uₐ) is evaluated for the purpose of providing the information and/or control signal (s),
**characterised in that**
- a solid-state actuator (11, 12; 11a, 11b, 11c, 11d) of a solid-state actuator drive device (0), which solid-state actuator can be driven by means of a drive signal (uₐ), is used as the sensor,
- with the sensor signal (uₐ) being separated from such a drive signal (uₑ) and output.

7. Method according to claim 6, wherein the sensor signal (uₐ) of at least two different solid-state actuators (11, 12; 11a - 11d) is evaluated with regard to a place of origin (Q) of the wave (w) in or on a higher-level device, in particular in or on a vehicle (8).

8. Method according to claim 6 or 7, wherein a propagation time difference (τ) from a place of origin (Q) of the wave (w) to the solid-state actuators (11, 12; 11a - 11d) is determined for the purpose of determining the place of origin (Q) of the wave (w) in or on a higher-level device, in particular by means of a correlation of the sensor signals.

9. Method according to claim 8, wherein actually existing possible propagation paths of the wave (da - wd) are taken into account when determining the propagation time difference (τ).

10. Method according to one of claims 6 to 9, wherein the sensor signals (uₐ) of at least two different solid-state actuators (11, 12) are evaluated as a function of direction with regard to the place of origin (Q) of the wave (w) in or on a higher-level device.

11. Method according to one of claims 6 to 10, wherein an intensity (S) of the wave (w) is taken into account during the evaluation for the purpose of determining an event type and/or an event intensity with regard to an origin of the wave (w).

12. Method according to one of claims 6 to 11, wherein a frequency spectrum (F (ω) ) of the wave (w) is taken into account during the evaluation for the purpose of determining an event type and/or an event intensity with regard to an origin of the wave.

13. Method according to one of claims 6 to 12, wherein a safety system of a higher-level device, in particular a safety system of a vehicle (8), in particular an active vehicle occupant protection system (64), is activated in the event of an accident, or an alarm system (63) is triggered in the event of a break-in, as a function of the type and/or intensity and/or time characteristic of such an information and/or control signal (s).

14. Solid-state actuator drive device (0) having at least one solid-state actuator (11, 12) and having a circuit (6) for outputting at least one sensor signal (uₐ) as a sensor for an acoustic wave detector according to a preceding claim.

15. Solid-state actuator drive device according to claim 14, having at least two solid-state actuators (11, 12) and a drive ring (31) coupled thereto for putting a shaft (2) into rotation.

## Revendications

1. Détecteur d'ondes sonores, comportant
- au moins un capteur pour recevoir une onde (w; wa, wb, wc, wd) et pour produire en sortie un signal de détection (uₐ) correspondant et
- un dispositif d'évaluation (6) pour évaluer le signal de détection (uₐ) et fournir un signal d'information et/ou de commande (s) dépendant du signal de détection,
**caractérisé en ce que**
- le capteur qui est réalisé par un actionneur à corps solide (11, 12; 11a, 11b, 11c, 11d), commandable par un signal de commande (uₑ), d'un dispositif de commande d'actionneur à corps solide (0) et
- un circuit (7; 7°; 7*) pour séparer le signal de détection (uₐ) d'un tel signal de commande (uₑ).

2. Détecteur d'ondes sonores selon la revendication 1, dans lequel au moins deux actionneurs à corps solide (11, 12; 11a - 11d) sont disposés à distance l'un de l'autre dans ou sur un dispositif générique, en particulier dans ou sur un véhicule (8) et/ou sont disposés l'un par rapport à l'autre selon un angle, dans leur sens de déplacement (x, y), pour permettre la détermination d'un lieu d'origine (Q) de l'onde (w; wa - wd) dans ou sur le dispositif supérieur.

3. Détecteur d'ondes sonores selon la revendication 2, dans lequel les au moins deux actionneurs à corps solide (11a - 11d) sont intégrés dans des dispositifs de commande d'actionneurs à corps solide différents l'un par rapport à l'autre.

4. Détecteur d'ondes sonores selon la revendication 2 ou 3, dans lequel les au moins deux actionneurs à corps solide (11, 12) sont intégrés dans un unique dispositif de commande d'actionneur(s) à corps solide (0).

5. Détecteur d'ondes sonores selon une revendication précédente, dans lequel le dispositif d'évaluation (6) est réalisé et/ou connecté pour déterminer un lieu d'origine (Q) de l'onde (w) et/ou une cause de l'onde (w) et comporte notamment, à cet effet, un interrupteur à seuil d'intensité, un analyseur de spectres, un corrélateur et/ou un détecteur de chocs.

6. Procédé pour recevoir et fournir au moins un signal d'information et/ou de commande (s) dépendant d'une onde (w; wa, wb, wc, wd) dans un détecteur d'ondes sonores, en particulier procédé destiné à être mis en oeuvre dans un détecteur d'ondes sonores selon une des revendications précédentes, dans lequel
- l'onde (w; wa - wd) d'un événement générateur d'ondes est reçue par au moins un capteur et produite en sortie sous la forme d'un signal de détection (uₐ), et
- le signal de détection (uₐ) est évalué pour fournir le signal d'information et/ou de commande (s),
**caractérisé en ce que**
- un actionneur à corps solide (11, 12; 11a, 11b, 11c, 11d) d'un dispositif de commande d'actionneur(s) à corps solide (0) commandable par un signal de commande (uₐ) est utilisé en tant que capteur,
- le signal de détection (uₐ) étant séparé d'un tel signal de commande (uₑ) et produit en sortie.

7. Procédé selon la revendication 6, dans lequel le signal de détection (uₐ) d'au moins deux actionneurs à corps solide (11, 12; 11a - 11d) différents est évalué quant à un lieu d'origine (Q) de l'onde (w) dans ou sur un dispositif supérieur, en particulier dans ou sur un véhicule (8).

8. Procédé selon la revendication 6 ou 7, dans lequel une différence de temps de propagation (τ) d'un lieu d'origine (Q) de l'onde (w) vers les actionneurs à corps solide (11, 12; 11a - 11d) est déterminée, en particulier au moyen d'une corrélation des signaux de détection, pour déterminer la source (Q) de l'onde (w) dans ou sur un dispositif supérieur.

9. Procédé selon la revendication 8, dans lequel il est tenu compte de chemins de propagation possibles concrètement existants de l'onde (da - wd) lors de la détermination de la différence de temps de propagation (τ).

10. Procédé selon l'une des revendications 6 à 9, dans lequel les signaux de détection (uₐ) d'au moins deux actionneurs à corps solide différents (11, 12) sont évalués en fonction de leur direction au regard du lieu d'origine (Q) de l'onde (w) dans ou sur un dispositif supérieur.

11. Procédé selon l'une des revendications 6 à 10, dans lequel il est tenu compte d'une intensité (S) de l'onde (w) lors de l'évaluation pour déterminer un type d'événement et/ou une intensité d'événement au regard d'un lieu d'origine de l'onde (w).

12. Procédé selon l'une des revendications 6 à 11, dans lequel il est tenu compte d'un spectre de fréquences (F(ω)) de l'onde (w) lors de l'évaluation pour déterminer un type d'événement et/ou une intensité d'événement au regard d'un lieu d'origine de l'onde.

13. Procédé selon l'une des revendications 6 à 12, dans lequel est commandé, en fonction du type et/ou de l'intensité et/ou de l'évolution temporelle d'un tel signal d'information et/ou de commande (s), un système de sécurité d'un dispositif supérieur, en particulier un système de sécurité d'un véhicule (8), en particulier un système de protection actif de véhicule et de personnes (64) en cas d'accident ou un système d'alarme (63) en cas d'effraction.

14. Dispositif de commande d'actionneur(s) à corps solide (0) avec au moins un actionneur à corps solide (11, 12) et un circuit (6) pour produire en sortie au moins un signal de détection (uₐ) en tant que capteur pour un détecteur d'ondes sonores selon une des revendications précédentes.

15. Dispositif de commande d'actionneur(s) à corps solide selon la revendication 14 avec au moins deux actionneurs à corps solide (11, 12) et une bague de commande (31) qui y est couplée pour mettre un arbre (2) en rotation.
